# EUROPEAN PATENT APPLICATION

(11) **EP 4 679 292 A1**
(43) Date of publication of application: **14.01.2026**
(21) Application number: 25187141.4
(22) Date of filing: 03.07.2025
(51) Int. Cl.: G06F 16/901, G06N 3/042, G06N 3/08, G06N 5/02, G06N 5/022

(54) **METHODS, APPARATUSES, DEVICES, AND COMPUTER PROGRAM PRODUCTS FOR RECOMMENDATION**

(30) Priority: 12.07.2024 CN 202410942344
(71) Applicant: Robert Bosch GmbH, 70442 Stuttgart (DE)
(72) Inventor: DENG, Xiaofeng, Shanghai, 200335 (CN); LI, Yuxiao, Shanghai, 200335 (CN); BAO, Lei, Shanghai, 200335 (CN); YE, Bei, Shanghai, 200335 (CN)

(57) **Abstract**

Examples of the present disclosure relate to methods, apparatuses, devices, and computer program products for recommendation. The method comprises obtaining a knowledge graph comprising a plurality of user nodes and a plurality of object nodes. The method further comprises generating one or more sub-graphs based on the knowledge graph, wherein the sub-graph comprises a user node corresponding to the first user and related object nodes among a plurality of user nodes. In addition, the method further comprises determining a recommendation result for the first user based on the one or more sub-graphs and the plurality of object nodes. The solution provided by the examples of the present disclosure enables the generation of sub-graphs representing the recommendation explanation when generating recommendation results, which not only improves the effectiveness of the recommendation, but also enhances the transparency and interpretability of the recommendation system, allowing users to better understand and accept the recommendation results and thereby improving the user experience of the recommendation system.

## Description

### Technical Field

Examples of the present disclosure relate to the computer field, and more particularly, to a method, apparatus, device, and computer program product for recommendation.

### Background

A recommendation system is a technology that uses algorithms and data analysis to predict content that users may be interested in and present it to users to improve user satisfaction and experience. Recommendation systems are widely used in a variety of scenarios, including e-commerce, social media, content platforms, music and video streaming media services, etc.

With the explosive growth of information and ever-changing user needs, recommendation systems are becoming increasingly important in today's Internet era. In the vast ocean of information, users often face the problem of information overload. Recommendation systems analyze user behavior and interests to provide users with personalized recommendations, helping them find information and products that meet their needs and preferences more quickly.

### Summary of the Invention

Examples of the present disclosure provide methods, apparatuses, devices, computer program products, and computer-readable storage media for recommendation.

A first aspect of the present disclosure provides a method for recommendation. The method comprises obtaining a knowledge graph comprising a plurality of user nodes and a plurality of object nodes. The method further comprises generating one or more sub-graphs based on the knowledge graph, wherein the sub-graph comprises a user node corresponding to the first user and related object nodes among the plurality of user nodes. In addition, the method further comprises determining a recommendation result for the first user based on the one or more sub-graphs and the plurality of object nodes.

A second aspect of the present disclosure provides an apparatus for recommendation. The apparatus comprises a knowledge graph acquisition module configured to acquire a knowledge graph comprising a plurality of user nodes and a plurality of object nodes. The apparatus further comprises a sub-graph generation module configured to generate one or more sub-graphs based on the knowledge graph, wherein the sub-graph comprises a user node corresponding to the first user and related object nodes among the plurality of user nodes. In addition, the apparatus further comprises a recommendation result determination module configured to determine a recommendation result for the first user based on the one or more sub-graphs and the plurality of object nodes.

According to a third aspect of the present disclosure, an electronic device is provided. The electronic device comprises at least one processor; and a memory coupled to the at least one processor and having instructions stored thereon that, when executed by the at least one processor, cause the device to perform the method of the first aspect of the present disclosure.

According to the fourth aspect of the present disclosure, a computer program product is provided. The computer program product is tangibly stored on a non-transitory computer-readable medium and includes computer-executable instructions that, when executed, cause the computer to perform the steps of the method of the first aspect of the disclosure.

According to a fifth aspect of the present disclosure, a computer-readable storage medium is provided. The machine-readable storage medium has machine-executable instructions stored thereon, wherein the machine-executable instructions are executed by a processor to implement the steps of the method of the first aspect of the present disclosure.

The Summary of the Invention is intended in part to introduce a selection of concepts in a simplified form, which will be further described in the embodiments below. The Summary of the Invention is not intended to identify the key features or essential features of the claimed subject matter, nor is it intended to limit the scope of the claimed subject matter.

### Brief Description of the Drawings

The exemplary examples of the present disclosure will be described in further detail in conjunction with accompanying drawings in order to further clarify the above-mentioned and other objectives, features, and advantages of the present disclosure, wherein in the exemplary examples of the present disclosure, the same reference number typically represents the same part.
FIG. 1 shows a schematic diagram of an exemplary environment in which the device and/or method according to examples of the present disclosure may be implemented;
FIG. 2 shows a flow chart of a method for recommendation according to examples of the present disclosure;
FIG. 3 shows a flow chart of a process for generating a recommendation result including interpretable user interactions in cross-selling according to examples of the present disclosure;
FIG. 4 shows a schematic diagram of an architecture for generating an interpretable user action path according to examples of the present disclosure;
FIG. 5 shows a schematic diagram of an exemplary graph ontology according to examples of the present disclosure;
Fig. 6A shows a schematic diagram of a user action path according to examples of the present disclosure;
Fig. 6B shows a schematic diagram of a user action path according to examples of the present disclosure;
FIG. 7 shows a schematic diagram of a recommendation result according to examples of the present disclosure
FIG. 8 shows a schematic diagram of an apparatus for recommendation according to examples of the present disclosure; and
FIG. 9 illustrates a schematic block diagram of an exemplary device according to an example that is suitable to embody the content of the present disclosure.

In the various accompanying drawings, the same or corresponding symbols represent the same or corresponding portions.

### Detailed Description of the Embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and other similar expressions should be understood as open-ended inclusion, that is, "comprising but not limited to." The term "based on" should be understood as "at least partially based on". The term "one example" or "this example" should be understood as "at least one example". The terms "first," "second," etc. may refer to different or the same objects unless otherwise specified. The text below may comprise other specific and implicit meanings.

As previously noted, recommendation systems are becoming increasingly important in today's Internet age. However, the techniques associated with recommendation systems are typically black box algorithms and users do not know how the recommendation results are generated, resulting in poor recommendation effectiveness. When recommending a product to a user, the effectiveness of the recommendation and the transparency of the recommendation system can be improved if it can be interpreted intuitively to allow the user to understand why the product is being recommended.

To this end, the examples of the present disclosure propose a solution for recommendation, which uses a knowledge graph comprising user nodes and object nodes for recommendation, generates a sub-graph representing user interactions through the knowledge graph, and then uses the sub-graph to determine the corresponding recommended objects for the user. The recommendation results ultimately returned include the sub-graph and the objects and the user can see the explanation of the recommendation results based on the user interactions in the sub-graph.

Thus, through the solution provided by examples of the present disclosure, it is possible to use the knowledge graph to perform a structured representation of user interactions and the relationships between objects. When generating recommendation results, it is possible to generate a sub-graph representing the recommendation explanation, which not only improves the effectiveness and accuracy of the recommendation, but also enhances the transparency and interpretability of the recommendation system, provides a clear explanation for the user behavior path, and allows users to better understand and accept the recommendation results, thereby improving the user experience of the recommendation system.

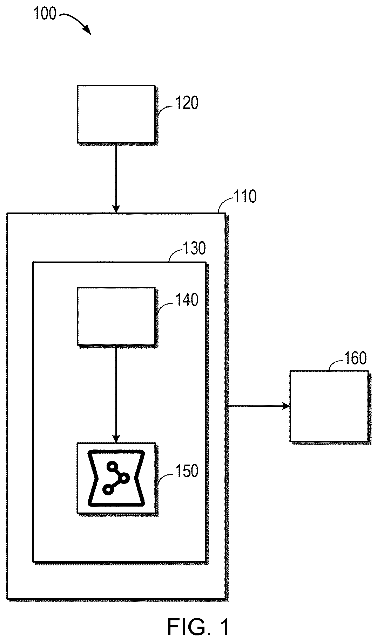

The basic principles and several exemplary implementations of the present disclosure are described below with reference to FIG. 1 to FIG. 9. It will be understood that these exemplary examples are given only to enable those skilled in the art to better understand and thereby achieve the example of the present disclosure and not to limit the scope of the present disclosure in any way.

FIG. 1 shows an exemplary environment 100 in which the device and/or method according to examples of the present disclosure may be implemented. As shown in FIG. 1, the example environment 100 may comprise a computing device 110, which may be a user terminal, a mobile device, a computer, etc. or may be a computing system, a single server, a distributed server, or a cloud-based server. The computing device 110 may obtain the user 120 and generate a corresponding recommendation result 160 for the user 120. It should be understood that only one user is shown herein as an example. Examples of the present disclosure may provide recommendation services to a plurality of users. The recommendation system 130 may make recommendations using the knowledge graph 140, which may comprise user nodes and object nodes. For example, the knowledge graph 140 may comprise a user node corresponding to the user 120. In addition, object nodes are objects in the recommendation system. For example, in a product recommendation system, an object node represents a product; in a video recommendation system, an object node represents a video. The examples of the present disclosure do not limit the recommended objects.

The recommendation system 130 may utilize the knowledge graph 140 to generate (a plurality of) sub-graph(s) 150 of the user 120. For example, the user node corresponding to the user 120 may be used as the initial node of the sub-graph 150 and the knowledge graph 140 may be utilized to iteratively update the sub-graph 150. After generating the sub-graph 150, the sub-graph 150 and object nodes may be utilized to generate a recommendation result 160. For example, the recommendation system 130 may select sub-graphs and object nodes with high relevance as recommendation results according to the relevance between the sub-graphs and the object nodes.

It will be understood that the architecture and functions in the example environment 100 are described for exemplary purposes only, without implying any limitation to the scope of the present disclosure. Examples of the present disclosure may also be applied to other environments having different structures and/or functions.

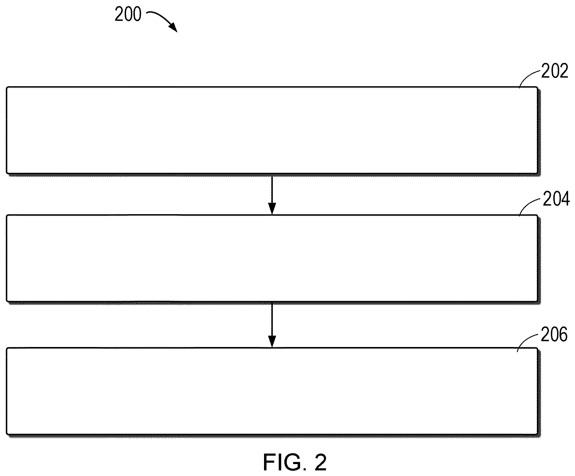

The process according to examples of the present disclosure will be described in detail below in conjunction with FIG. 2 to FIG. 9. For ease of understanding, the specific data mentioned in the following description are exemplary and are not used for defining the scope of protection of the present disclosure. It will be understood that the examples described below may also comprise additional actions not shown and/or actions that may be omitted as shown, the scope of the present disclosure being not limited in this regard.

FIG. 2 shows a flow chart of a method 200 for recommendation according to examples of the present disclosure. At block 202, a knowledge graph may be acquired that comprises user nodes and object nodes. For example, as described in conjunction with FIG. 1, the recommendation system 130 may obtain a knowledge graph 140 comprising user nodes and object nodes. When an entity node in the knowledge graph is of a user type, the node can be called a user node. When an entity node in the knowledge graph is of an object type, the node can be called an object node, and the object node is an object to be recommended to the user.

At block 204, one or more sub-graphs representing user interactions may be generated based on the knowledge graph and the user node, wherein the user node is an initial node of the one or more sub-graphs. For example, as described in conjunction with FIG. 1, the recommendation system 130 may generate one or more sub-graphs 150 representing user interactions based on the knowledge graph 140 and user nodes. A sub-graph is a partial graph extracted from the original knowledge graph, which comprises a part of the entity nodes and the connection relationships between entity nodes (i.e., relationship nodes). The sub-graph can simplify the complexity of the original graph, making it possible to process and analyze data more efficiently.

As block 206, a recommendation result for the first user may be determined based on the one or more sub-graphs and the plurality of object nodes. For example, as described in conjunction with FIG. 1, the recommendation system 130 may determine a recommendation result 160 for the first user based on one or more sub-graphs 150 and the plurality of object nodes.

In some examples, the recommendation method further comprises: determining an explanation of the recommendation result 160, the explanation comprising a sub-graph associated with the recommendation result and an importance score of each node in the sub-graph to the recommendation result.

Thus, based on the method 200 according to examples of the present disclosure, it is possible to use the knowledge graph to perform a structured representation of user interactions and the relationships between objects. When generating recommendation results, it is possible to generate a sub-graph representing the recommendation explanation, which not only improves the effectiveness of the recommendation, but also enhances the transparency and interpretability of the recommendation system and allows users to better understand and accept the recommendation results, thereby improving the user experience of the recommendation system.

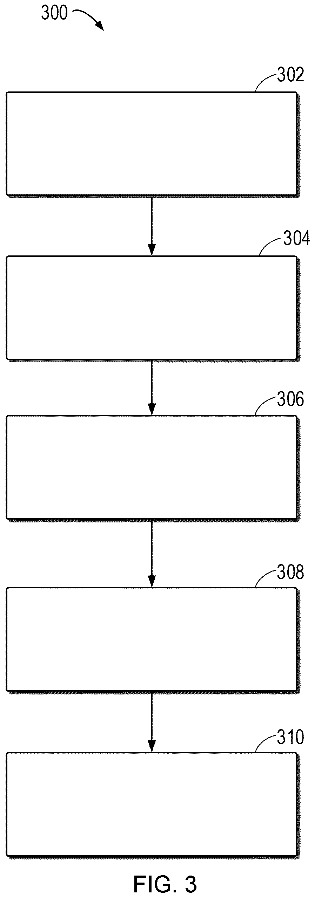

FIG. 3 shows a flow chart of a process 300 for generating a recommendation result including interpretable user interactions in cross-selling according to examples of the present disclosure. User interaction refers to the user's action path, such as viewing, clicking, obtaining, and other interactive actions. Cross-selling indicates that user interaction can be cross-platform and cross-category. Today, companies typically sell a plurality of products in different categories, all of which use the same brand. For example, some brands sell electric tools, automotive parts, and home appliances. Therefore, it would be unreasonable to consider only a single category of recommendations. At the same time, with the rapid development of the Internet, users are active on a plurality of channels, such as e-commerce platforms and social media platforms. As a result, cross-category and cross-platform recommendations have become valuable and necessary. Therefore, companies not only need to provide accurate recommendations for short-term sales conversions, but also need to explain users' behavior paths to support long-term marketing strategies and attribution analysis.

In addition, companies or merchants can deeply analyze the user's decision-making chain based on the explanation of the recommendation results to identify user needs and preferences. This insight helps to guide users and formulate more precise marketing strategies, such as cross-platform or cross-category operations or marketing strategies. In addition, the explanation of recommendation results can also provide sales leads to merchants or companies. These leads include information such as the potential demand, buying intentions, and spending habits of users.

As shown in FIG. 3, at block 302, source data may be loaded. For example, source data may include but are not limited to user data, product data, business data, and content data. User data may include but are not limited to user identifiers (IDs), acquisition information, and membership information, which record user activities and behaviors on various channels, such as acquisition history, membership status, and other relevant information. Product data may include but are not limited to product name, product category, and product description, which record the basic attributes and characteristics of products. Business data may be channel data that include a variety of channels from which products originate, i.e., different platforms (e.g., e-commerce platforms). Channel data may include store information as well as member information for different platforms and may also include information related to official accounts and mini-programs on the platform, such as push, likes, product releases, and user follow-ups. Content data may include text information such as comment content and push content.

In some examples, source data may be loaded from a content management system (CMS), a consumer data platform (CDP), and a third-party data platform. A CMS is a software application or tool for managing digital content that allows users to create, edit, organize, and publish various types of content, including text, images, audio, video, etc. A CMS can simplify the management and publishing process of digital content, enabling individual users and organizations to manage digital content more efficiently. A CDP is a software system or tool that can collect, integrate, and manage consumer data from a plurality of sources so that the company can better understand and interact with users. A CDP can include personal consumer information from various channels and data sources, such as online behavior, transaction history, social media activity, and customer service records. Third-party data platforms are data management and analytics solutions provided by independent entities or companies that typically provide companies with services such as data collection, integration, storage, analysis, and activation. Enterprises can use third-party data platforms to leverage external data resources to enrich their internal data. In some examples, source data may be loaded from a data block of a third-party cloud service.

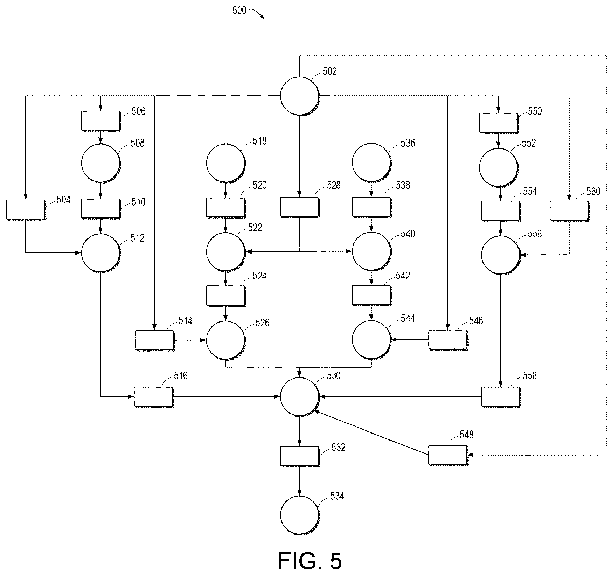

At block 304, a knowledge graph may be constructed based on the source data and the graph ontology. Before constructing a knowledge graph, it is necessary to construct a graph ontology to organize the knowledge graph information structure. A graph ontology is a collection of abstract concepts in a field, which can describe the common features of entities and the relationships between entities. An example of a graph ontology of examples of the present disclosure will be described below in conjunction with FIG. 5. In some examples, the knowledge graph may be saved as a plurality of information files. First, the information file of the entity node may be saved. The entity node may include user nodes, object nodes, channel nodes, etc., where the channel nodes can include business platform nodes, content nodes, etc. User nodes may represent users. Object nodes may represent objects that are recommended to the user, such as items, articles, short videos, and the like. Channel nodes represent the source or channel of object nodes. For example, if a product comes from an e-commerce platform, then the e-commerce platform belongs to the channel node. The content node can represent content carriers such as tweets or videos that can record the object. For example, a tweet can record or promote a product. It will be understood that the entity nodes in the knowledge graph represent entity information and relationship nodes represent the information of the relationship between entities.

For example, the entity information in the knowledge graph may be saved as a file containing the entity ID, name, and description. For example, entity information may be represented as (1, product: screwdriver, a common tool used to turn screws to put them in place). The file of relationship information between entities can then be saved. For example, the relationship information between entities in the knowledge graph can be saved as another file that contains the ID and name of the relationship. For example, the relationship information may be expressed as (0, obtained). Finally, the knowledge graph information file can be saved. For example, the knowledge graph information may be saved as a file of triple sets. Each triple is represented as (subject node, relation node, object node). For example, a triple can be represented as (user A, obtained, product: screwdriver). When the knowledge graph needs to be extracted, the triples can be read from the saved knowledge graph information file and the entity nodes and relationship nodes can be replaced with the corresponding IDs. For example, entity node names are replaced with entity IDs and relationship nodes with relationship IDs, such as (entity node: 0, relationship node: 0, entity node: 1).

At block 306, the vector representation of the attribute node and the relationship node in the knowledge graph may be learned by the model. In some examples, an initialization vector representation of an entity node may be generated using a pre-trained language model. For example, the entity description in the entity information file is passed as input to the language model to obtain the semantic embedding (i.e., vector representation) of the entity. A language model is a model that can understand and generate natural language text. It can encode the input text into a high-dimensional vector representation and capture the semantic information of the text. After the language model processes the entity description, a semantic embedding of the corresponding entity can be generated, which includes the semantic information of the entity's description and typically has a higher dimension to retain more semantic details. Finally, the semantic embedding can be used as the initialization embedding of the entity, which will be used as the input of the graph neural network.

In some examples, a graph neural network model can be used to generate vector representations of entity nodes and relationship nodes in the knowledge graph through learning based on an initialization embedding of the entity and an information file of the knowledge graph. For example, knowledge graph information and entity initialization vectors can be obtained. Knowledge graph information can include triple relationships between nodes, while entity initialization vectors contain the semantic information of the entity. The knowledge graph information and the initialization vector of the entity is then input into the graph neural network model, generating node vectors for the entity nodes and the relationship nodes in the knowledge graph. The graph neural network model is a neural network model specifically used to process graph structured data. It can effectively learn the structural relationship between nodes in the graph and obtain the final vector of the node through calculation and iteration through a multi-layer neural network structure. The node vector captures the node's semantic information and structural information in the knowledge graph and is a representation and understanding the node in the graph structure.

At block 308, a recommendation model may be trained based on node vectors of entity nodes and relationship nodes in the knowledge graph. In some examples, a sub-graph of interest to a user may be extracted from the knowledge graph based on the node vectors of the entity nodes and the relationship nodes. In some examples, the user interaction model is trained based on behavioral cloning. For example, the user interaction model predicts the relevance of neighbor nodes to the user node, that is, the user's interest score, by learning samples from user interactions, such as clicks, acquisitions, and other behaviors. In some examples, the interaction data of the user may be acquired, the interaction data node vector of the user includes object data and channel business data related to the user, and then the user interaction model is trained based on the interaction data. In some examples, the relevance score may be determined using a user interaction model based on the sub-graph vector and the node vectors of the plurality of neighbor nodes. For example, the relevance score between the sub-graph and neighbor nodes may be determined by a user interaction model and neighbor nodes with high relevance may be selected to update the sub-graph.

In some examples, a loss function may be utilized to optimize the user interaction model such that a high score can be obtained for a neighbor node that represents the current node's neighbor information. In some examples, the knowledge graph may be pruned using the user's interest score to obtain a sub-gap representing the user's interests. For example, an initialized sub-graph may first be obtained, where the initialized sub-graph only contains user nodes. The user interest scores may then be calculated using the user interaction model for neighbor nodes in the sub-graph, which may be other nodes associated with the user, such as products, channels, etc. The user interaction model can calculate the degree of relevance of neighbor nodes to the user node based on the features and relationships of neighbor nodes. The sub-graph may then be updated iteratively, such as by adding neighbor nodes with higher scores to the sub-graph and performing a plurality of rounds of updates, each of which takes into account the newly added nodes to recalculate the scores of the neighbor nodes and decide whether to add them to the sub-graph. In some examples, the last node added to the sub-graph may be taken as a leaf node (i.e., a product to be recommended) and the similarity (i.e., the degree of relevance) between the leaf node and the sub-graph as the recommendation score for the product. For example, the recommendation score may be determined by the vector similarity between the vector of the sub-graph and the vector of the leaf node. In some examples, a neural network may be utilized to encode a sub-graph to generate a vector of the sub-graph. For example, a graph neural network model may be selected to generate a vector of a sub-graph based on the node vectors in the sub-graph.

In some examples, a plurality of weights for a plurality of sub-graphs linked to the leaf node may be obtained. The similarity of each of the sub-graphs to the leaf node is then determined and and the plurality of weights and corresponding similarities may be weighted to determine the final recommendation score. In some examples, the weight of the sub-graph may be the weight of the edge between the sub-graph and the leaf node (i.e., the relationship node), and the weight of the edge may be pre-configured. In still further examples, the maximum value of the similarity between the leaf node and each sub-graph may be taken as the final recommendation score.

At block 310, the recommendation result may be obtained based on the recommendation score and the corresponding sub-graphs may be used as interpretable user action paths. For example, the sub-graphs of the top 10 products, which are the sub-graphs with the highest relevance to the interests of the user, can be obtained. The leaf nodes (i.e., product nodes) of the sub-graphs may be acquired, the leaf nodes representing products that may be of interest to the user. The sub-graph may be used as a user action path that records the user's behavior trajectory or decision path in the knowledge graph, the path from the initial node (user node) to the leaf node (product node). Users can understand the explanation of the recommendation results through this path.

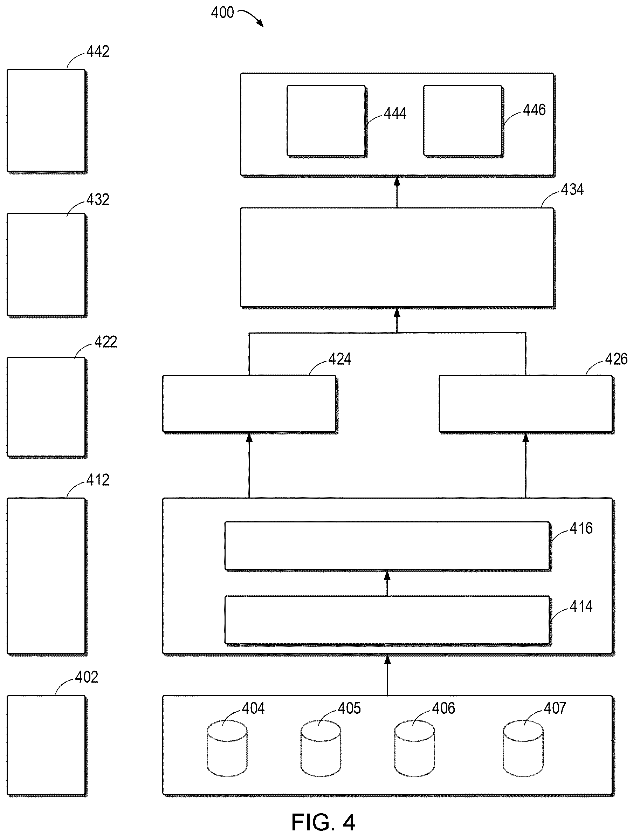

FIG. 4 shows a schematic diagram of an architecture 400 for generating an interpretable user action path according to examples of the present disclosure. The data source module 402 may include user data 404, product data 405, channel data 406, and content data 407. The knowledge graph module 412 may include an ontology construction module 414 and a graph generation module 416. The ontology construction module 414 can construct a graph ontology for organizing the information structure of the knowledge graph. The graph ontology is a collection of abstract concepts in a domain that can describe the common characteristics of entities and the relationships between entities. The graph generation module 416 can generate a knowledge graph based on the graph ontology and all the data in the data source module 402. The knowledge graph includes entity nodes and relationship nodes. Entity nodes may include nodes such as users, products, and channels. Relationship nodes may represent the relationships between entity nodes, such as belonging to, having, obtaining, etc.

The graph representation module 422 may include a semantic information module 424 and a structural information module 426. The graph representation module 422 can learn the vector representation of entity nodes and relationship nodes in the knowledge graph through the model. The semantic information module 424 can use a pre-trained language model to generate an initialization vector representation of an entity node. For example, the entity description in the entity information file is passed as input to the language model to obtain the semantic embedding (i.e., vector representation) of the entity. A language model is a model that can understand and generate natural language text. It can encode the input text into a high-dimensional vector representation and capture the semantic information of the text. The structural information module 426 can generate vector representations of entity nodes and relationship nodes in the knowledge graph using a graph neural network model based on the initialization embedding of the entity. The node vector representation captures the node's semantic information and structural information in the knowledge graph and is a representation and understanding the node in the graph structure. In this way, the semantic relationship between nodes can be obtained from the name and description of the text information and the logical and topological relationships within the knowledge graph can be identified. For example, the knowledge graph we constructed can help us discover the complementary relationship between household appliances and power tools.

The sub-graph reasoning module 432 may include a sub-graph learning to rank module 434. The sub-graph learning ranking module 434 can extract sub-graphs that the user is interested in from the knowledge graph. For example, the sub-graph learning ranking module 434 can use the user interaction model to predict the relevance of neighbor nodes to the user node, that is, the user's interest score, by learning samples from user behaviors, such as clicks, acquisitions, and other behaviors. The recommendation application module 442 may include a recommendation result module 444 and a recommendation action path module 446. The recommendation result module 444 in the recommendation application module 442 may generate a plurality of recommendation results (e.g., a plurality of products) recommended to the user and corresponding recommendation scores. The recommendation action path module 446 can generate a sub-graph of interest to the user as an explainable user action path of the recommendation result, through which the sub-graph can explain why the corresponding product is recommended to the user.

FIG. 5 shows a schematic diagram of an exemplary graph ontology 500 according to examples of the present disclosure. A graph ontology is a collection of abstract concepts in a domain, which can describe the common features of entities and the relationships between entities, as shown in FIG. 5, where circular nodes represent entity nodes and rectangular nodes represent relationship nodes. The graph ontology defines the process by which users obtain products through different channels and make decisions based on the content generated in different stores. By way of the graph ontology, the knowledge graph can describe the user action path that connects the user, product, and channel. The entity nodes in the graph ontology may include user nodes, object nodes, and channel nodes. Object nodes are objects that can be recommended in the recommendation system. For example, in a product recommendation system, an object node represents a product; in a video recommendation system, an object node represents a video. The object node here is a product node, but it should be understood that the examples of the present disclosure do not limit the recommended objects. In some examples, the entity nodes in the knowledge graph may include the following 8 types of nodes: User nodes, product nodes, channel nodes (e.g., JD.com, Tmall, TikTok, and WeChat), category nodes, store nodes, official account nodes, and tweet nodes.

As shown in FIG. 5, from left to right, the user node 502 may be obtained at the store node 512, and the relationship node 504 between the user node 502 and the store node 512 represents "obtained at..." The user node 502 may be a user and/or member of the channel node 508 and the relationship node 506 may indicate "a user and/or member of..." For example, the channel node 508 may be an e-commerce platform and the user may be a user and/or member of the e-commerce platform. The channel node 508 may include a store node 512 and the relationship node 510 may indicate "having." For example, an e-commerce platform may have a store. The store node 512 may include a product node 530 and the relationship node 516 may indicate "including," for example, a store may include a plurality of products.

The user node 502 may read the content node 526 and the relationships node 514 may be "read." For example, the user may read the content of the article. The channel node 518 may have an official account node 522 and the relationship node 520 may indicate "having." For example, the channel node 518 may be a social platform with a plurality of official accounts. The official account node 522 may have a content node 526 and the relationship node 524 may indicate "having." For example, an official account may post a plurality of articles, i.e., have a plurality of article contents. The user node 502 may follow the official account node 522 and the relationship node 528 may indicate "followed."

The channel node 536 may have a user node 540 and the relationship node 538 may indicate "having." For example, the channel node 536 may be a short video platform and the user node 540 may be a user of that short video platform. The user node 502 may follow the user node 540 and the relationship node 528 may indicate "followed." The user node 540 may have a content node 544 and the relationship node 542 may indicate "having." For example, a user of a short video platform may publish short video content. The user node 502 may read the content node 526 and the relationships node 546 may be "read." For example, the user may browse the content of the short video.

The user node 502 may be a user and/or member of the channel node 552 and the relationship node 550 may indicate "a user and/or member of..." For example, the channel node 552 may be another e-commerce platform different from the channel node 508 and the user may be a user and/or member of the other e-commerce platform. The channel node 552 may include a store node 556 and the relationship node 554 may indicate "having." For example, the e-commerce platform may have a store. The store node 556 may include a product node 530 and the relationship node 558 may indicate "including," for example, a store may include a plurality of products. The user node 502 may be obtained at the store node 556 and the relationship node 560 may indicate "obtained at..." For example, a user has previously obtained a product at a store. The user node 502 may have clicked and/or obtained the product node 530 and the relationship node 548 may indicate "clicked and/or obtained." The item node 530 may belong to the category node 534 and the relationship node 532 may indicate "belonging to." For example, a product is of the automotive category.

The ontology graph provided by the examples of the present disclosure defines the process of users obtaining products through different channels and making decisions through content generated in different stores so as to comprehensively describe the user behavior path and realize cross-channel and cross-category behavior integration, thereby improving the recommendation effect and interpretability of the recommendation system.

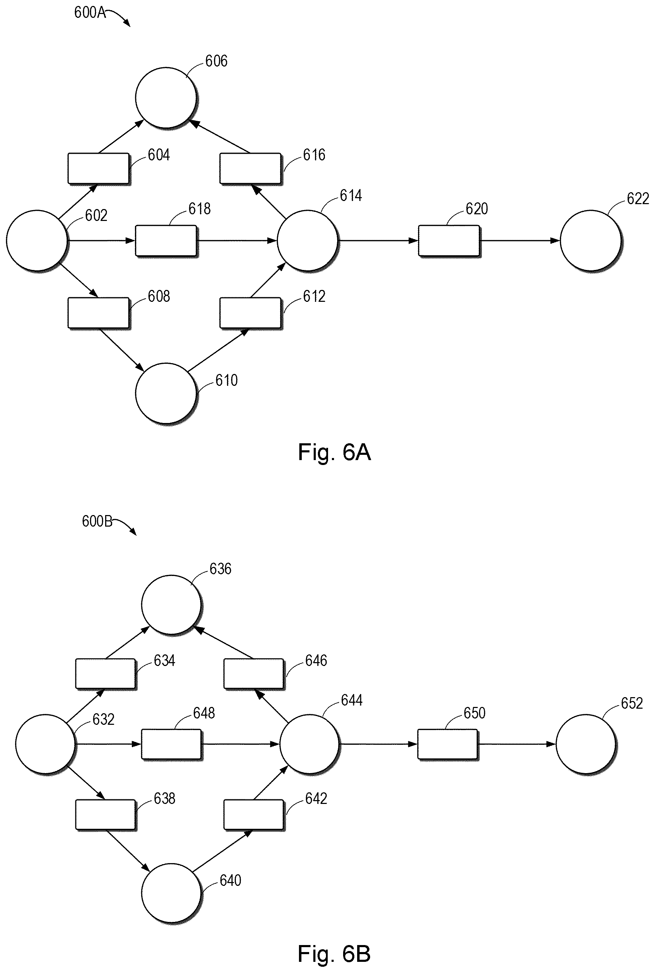

Fig. 6A shows a schematic diagram of a user action path 600A according to examples of the present disclosure. The user action path 600A may represent the action path of the user 602 to obtain the product 622. The product 622 may be a recommended product for the user 602 and is the last entity node (also called a leaf node) added to the user action path. The part of the user action path other than the leaf nodes and the corresponding relationship nodes is called the sub-graph of interest to the user. As shown in FIG. 6A, the user 602 may have obtained a product 606 and the relationship node 604 may be "obtained." For example, the user 602 may have obtained a product 606 (e.g., a car fragrance). The user 602 may follow the official account 610 and the relationship node 608 may be "followed." For example, the official account 610 may be an official account related to automobiles. The official account 610 may have content 614 and the relationship node 612 may be "having." For example, the official account may post articles. The content node 614 may include a product 606 and the relationship node 616 may be "including." For example, the content of the article may refer to car fragrances. Further, the user 602 may read the content 614 and the relationship node 618 may be "read." For example, a user has read the content of an article on an official account. The content 614 may include a product 622 and the relationship node 620 may indicate "including." For example, an article on an official account may introduce or promote car air filters. In this way, the user action path can be used as a recommendation explanation for the recommended product, and when users are recommended the product, they can understand the reason for the recommendation. For example, a user is recommended a car air filter because the user has obtained car fragrance, followed an official account related to cars, and read articles including car air filters. These are all user action paths. In addition, examples of the present disclosure may also use knowledge graphs to integrate user data, product data, sub-brand data, and platform data, thereby being able to obtain comprehensive information from different data sources, especially sub-brand data, to help provide more accurate and personalized recommendations.

Fig. 6B shows a schematic diagram of a user action path 600B according to examples of the present disclosure. The user action path 600B may represent an action path for the user 632 to obtain the product 652. The product 652 may be a recommended product for the user 632 and is the entity node that is finally added to the user action path. As shown in FIG. 6B, the user 632 may have obtained a product 636 and the relationship node 634 may be "obtained." For example, the user 632 may have obtained a product 606 (e.g., windshield wipers). The user 632 may be a member of the platform 640 and the relationship node 638 may be "is a member." For example, the platform 640 may be an e-commerce platform. The platform 640 may have a store 644 and the relationship node 642 may be "having." For example, there can be a plurality of stores on the e-commerce platform. The store 644 may include a product 636 and the relationship node 646 may be "including." For example, a store on an e-commerce platform (e.g., an auto parts flagship store) may include windshield wiper products. Further, the user 632 may have obtained the product at the store 644 and the relationship node 648 may indicate "purchased at..." The store 644 may include a product 652 and the relationship node 650 may indicate "including." For example, the store 644 may include an air filter cleanser. In this way, the user action path can be used as a recommendation explanation for the recommended product, and when users are recommended the product, they can understand the reason for the recommendation. For example, a user is recommended a car air filter cleanser because the user has obtained windshield wipers, is a member of the e-commerce platform, and has obtained products from the auto parts flagship store of the e-commerce platform. Thus, the store's car air filter cleanser is recommended to the user.

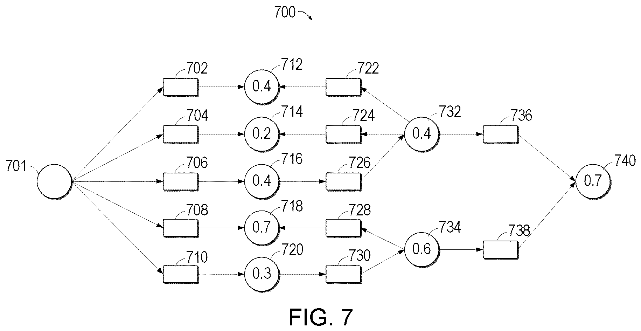

FIG. 7 shows a schematic diagram of a recommendation result 700 according to examples of the present disclosure. The user 701 may have obtained the windshield wipers 712, where the relationship node 702 may indicate "obtained," and "0.4" in the windshield wipers 712 indicates that the relevance score between the windshield wipers 712 and the user 701 is 0.4, which can be calculated by processing the node vectors of the user 701, the relationship node 702, and the windshield wipers 712 through a user interaction model. In addition, the user 701 may be a member of the platform 714, the relationship node 704 may indicate "is a member," and the platform 714 may have a relevance score of 0.2 for the user 701. The user 701 may have obtained the car battery 716, the relationship node 706 may be "obtained," and the relevance score between the car battery 716 and the user 701 is 0.4. In addition, the store 732 may include windshield wipers 712 and a car battery 716 and relationship nodes 722 and 726 may be "including," the store 732 may belong to the platform 714 and relationship node 724 may indicate "belonging," and the relevance score of the sub-graph consisting of the store 732, the user 701, the windshield wipers 712, the platform 714, the car battery 716, and the corresponding relationship nodes is 0.4. The store 732 may include a car air filter 740 and the relationship node 736 may indicate "including." For example, the store 732 may sell a car air filter 740. A similarity score may be calculated between the car air filter 740 and the sub-graph including the store 732.

Continuing to refer to FIG. 7, the user 701 may have obtained the car battery 718, the relationship node 708 may be "obtained," and the relevance score between the car battery 718 and the user 701 is 0.7. The user 701 may follow the official account 720, the relationship node 710 may indicated "followed," and the relevance score between the official account 720 and the user 701 is 0.3. In addition, the official account 720 may publish a tweet 734, the relationship node 734 may indicated "published," the tweet 734 may introduce the car battery 718, and the relationship node 728 may indicated "introduced." The relevance score of the sub-graph composed of the tweet 734, user 701, car battery 718, official account 720, and corresponding relationship nodes is 0.6. Additionally, the tweet 734 may introduce the car air filter 740 and the relationship node 738 may indicated "introduced." The air filter 740 also has a relevance score, e.g., 0.5, with another sub-graph including tweet 734 (not shown).

The weight between the car air filter 740 and the sub-graph including store 732 and the weight between the car air filter 740 and another sub-graph including tweet 734 can be obtained. The similarities between the car air filter 740 and these sub-graphs are then weighted by these weights to determine the final recommendation score. For example, the weight of a sub-graph including the store 732 may be the weight of the relationship node 736 (the weight of the edge between the store 732 and the air filter 740), the weight of another sub-graph including the tweet 734 may be the weight of the relationship node 738 (the weight of the edge between the tweet 734 and the air filter 740), and these weights may be pre-configured.

In still further examples, the weight of each sub-graph may not be considered, and the maximum value of the similarity score between the leaf node and each sub-graph may be used as the final recommendation score. For example, if the calculated similarity score between the car air filter 740 and a sub-graph including the store 732 is 0.7 (not shown) and the calculated relevance score between the air filter 740 and another sub-graph including the tweet 734 is 0.5 (not shown), then the recommendation score of the car air filter 740 is 0.7.

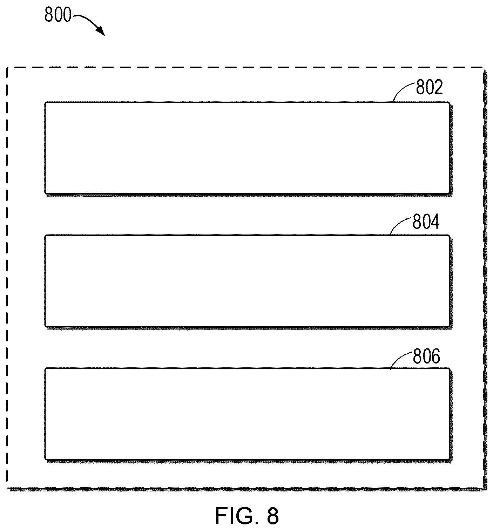

FIG. 8 shows a schematic diagram of an apparatus 800 for recommendation according to examples of the present disclosure. The apparatus 800 comprises a knowledge graph acquisition module 802 configured to acquire a knowledge graph comprising a plurality of user nodes and a plurality of object nodes. The apparatus 800 further comprises a sub-graph generation module 804 configured to generate one or more sub-graphs based on the knowledge graph, wherein the sub-graph comprises a user node corresponding to the first user and related object nodes among the plurality of user nodes. In addition, the apparatus 800 further comprises a recommendation result determination module 806 configured to determine a recommendation result for the first user based on the one or more sub-graphs and the plurality of object nodes.

In some examples, the apparatus 800 further comprises: a source data acquisition module configured to acquire source data for constructing the knowledge graph, wherein the source data include at least user data, object data, and channel data, wherein the channel data represent channels through which a user establishes an association with an object; a graph ontology acquisition module configured to use the graph ontology to define types of entity nodes in the knowledge graph, including user nodes, object nodes, and channel nodes; and a knowledge graph construction module configured to construct the knowledge graph based on the source data and the graph ontology.

In some examples, the knowledge graph construction module comprises: a node file generation module configured to generate a first file for an entity node, wherein the first file includes an identifier, a name, and a description of the entity node, wherein the entity node includes the user nodes and the object nodes; a relationship information generation module configured to generate a second file for a relationship node between entity nodes, wherein the second file includes an identifier and a name of the relationship node; and a knowledge graph second construction module configured to construct the knowledge graph based on the entity nodes and the relationship nodes.

In some examples, the knowledge graph construction module comprises: a triple set determination module configured to generate a triple through the first file and the second file, comprising: based on the entity nodes in the first file and the relationship nodes in the second file, a triple set is determined, wherein the triples in the triple set include a pair of entity nodes and corresponding relationship nodes; and a graph file generation module configured to generate an information file of the knowledge graph based on the triple set.

In some examples, the knowledge graph construction module further comprises: an identifier replacement module configured to replace the entity nodes and relationship nodes in the triple set in the information file of the knowledge graph with corresponding identifiers.

In some examples, the knowledge graph construction module further comprises: an initialization embedding generation module configured to generate an initialization embedding of the entity node using a pre-trained language model based on the description of the entity node; and a node vector generation module configured to generate a node embedding of the entity node and a node embedding of the relationship node using a graph neural network based on the initialization embedding of the entity node and the information file of the knowledge graph, wherein the node embedding indicates the semantic information and structural information of the node in the knowledge graph.

In some examples, the sub-graph generation module comprises: a sub-graph determination module configured to determine one or more initial sub-graphs and use the user node corresponding to the first user as the initial node of the one or more initial sub-graphs; a relevance score determination module configured to determine a plurality of relevance scores between the user node corresponding to the first user and a plurality of neighbor nodes; and a sub-graph update module configured to update the one or more initial sub-graphs based on the plurality of relevance scores.

In some examples, the relevance score determination module comprises: a sub-graph vector generation module configured to generate a sub-graph vector of the sub-graph based on the node vector in the initial sub-graph; and a second relevance score determination module configured to determine the plurality of relevance scores based on the sub-graph vector and the node vectors of the plurality of neighbor nodes using a trained user interaction model.

In some examples, the sub-graph vector generation module comprises: a graph information acquisition module configured to acquire a triple set of the sub-graph and a node vector of each node in the sub-graph; and a sub-graph vector second generation module configured to generate the sub-graph vector based on the triple set and the node vector of each node in the sub-graph. In some examples, a neural network may be utilized to encode a sub-graph to generate the sub-graph vector. For example, a graph neural network model may be selected to generate the sub-graph vector based on the node vectors in the sub-graph.

In some examples, this further comprises: an interaction data acquisition module configured to acquire user interaction data, wherein the node vector includes object data and channel data at least related to the first user; and an interaction model training module to generate the trained user interaction model based on the interaction data.

In some examples, the sub-graph update module comprises: a neighbor node selection module is configured to select a plurality of relevant neighbor nodes from the plurality of neighbor nodes based on the plurality of relevance scores and the score threshold; and a sub-graph second update module configured to update the plurality of initial sub-graphs by adding the plurality of relevant neighbor nodes to the plurality of initial sub-graphs.

In some examples, the recommendation result determination module comprises: a recommendation score determination module configured to determine a plurality of recommendation scores based on one or more sub-graph vectors and a plurality of node vectors of the plurality of object nodes; and a recommendation result selection module configured to select the recommendation results from the one or more sub-graphs and a plurality of object nodes based on the plurality of recommendation scores.

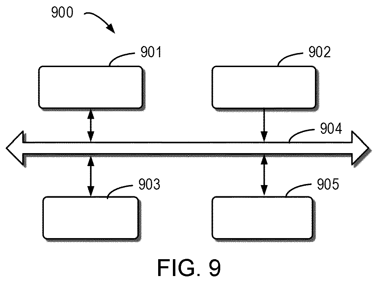

FIG. 9 illustrates a schematic block diagram of an exemplary device 900 suitable for implementing the examples of the present disclosure. As shown, the device 900 comprises a processor 901, which can perform various appropriate actions and processes according to computer program instructions stored in a read-only memory (ROM) 902 and loaded into a random-access memory (RAM) 903. Various programs and data required for the operation of the device 900 may also be stored in the RAM 903. The processor 901, the ROM 902, and the RAM 903 are interconnected through a bus 904. An input/output (I/O) interface 905 is also connected to the bus 904.

The various methods and processes described above may be executed by the processor 901. For example, in some examples, the various methods and processes described above may be implemented as computer software programs tangibly embodied in a machine-readable medium. In some examples, part or all of the computer programs may be loaded and/or installed onto the device 900 through the ROM 902. When the computer program is loaded into the RAM 903 and executed by the processor 901, one or more actions of the methods and processes described above may be performed.

The present disclosure may be a method, device, system and/or computer program product. The computer program product may comprise a computer-readable storage medium uploaded with computer-readable program instructions for performing various aspects of the present disclosure.

The computer-readable storage medium may be a tangible device that maintains and stores instructions used to instruct execution devices. The computer-readable storage medium, for example, may be - but is not limited to - an electrical storage device, magnetic storage device, optical storage device, electromagnetic storage device, semiconductor memory device, or any suitable combination of the above. More specific examples of the computer-readable storage medium (a non-exhaustive list) comprise: random access memory (RAM), read-only memory (ROM), erasable programmable read-only memory (EPROM or flash memory), static random access memory (SRAM), and any suitable combination of the above. The computer-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein may be downloaded to various computing/processing devices from computer-readable storage medium, or downloaded from networks, such as the Internet, a local area network, a wide-area network and/or a wireless network to external computers or external storage devices. The networks may comprise copper transmission cables, optical fiber transmissions, wireless transmissions, routers, firewalls, switches, gateway computers, and/or edge servers. The network adapter card or network interface in each computing/processing device receives the computer-readable program instructions from the network and forwards the computer-readable program instructions for storage in computer-readable storage medium of each computing/processing device.

The computer program instructions used to execute the operations of the present disclosure may be assembly instructions, instructions set architecture (ISA) instructions, machine instructions, machine-related instructions, microcode, firmware instructions, state-setting data, or source code or object code written with any combination of one or many programming languages, with the programming languages including object-oriented programming languages such as Smalltalk, C++, etc., as well as conventional procedural programming languages such as "C" language or similar programming languages. Computer-readable program instructions may be fully executed on the user's computer, partially executed on the user's computer, executed as an independent software package, partially executed on the user's computer and partially executed on a remote computer, or fully executed on a remote computer or server. Where a remote computer is involved, the remote computer may be connected to the user's computer through any type of network, including local area network (LAN) or wide area network (WAN), or it may be connected to an external computer (such as by using an Internet service provider for Internet connection). In some examples, the state information of computer-readable program instructions is used to personalize custom electronic circuits, such as a programmable logic circuit, field-programmable gate array (FPGA) or programmable logic array (PLA), wherein the electronic circuit is able to execute computer-readable program instructions, thereby achieving the various aspects of the present disclosure.

Various aspects of the present disclosure are described herein with reference to flow charts and/or block diagrams depicting methods, apparatus (systems), and computer program products according to the examples of the present disclosure. It should be understood that every block in the flow charts and/or block diagrams and the combinations of various blocks in the flow charts and/or block diagrams may be implemented by computer-readable program instructions.

These computer-readable program instructions may be provided to general-purpose computers, dedicated computers or the processing units of other programmable data processing devices, thereby producing a type of machine, such that when these instructions are executed by the computers or processing units of other programmable data processing devices, an apparatus that realizes the functions/actions stipulated in one or more boxes in the flow charts and/or block diagrams is produced. These computer-readable program instructions may also be stored in computer-readable storage medium, enabling computers, programmable data processing devices, and/or other devices to operate in a specific manner. Therefore, the computer-readable media containing instructions comprise a manufactured product that comprises instructions for implementing various aspects of the functions/actions specified in one or more boxes in the flow charts and/or block diagrams.

The computer-readable program instructions may also be loaded onto a computer, other programmable data processing devices, or other devices, enabling a series of operational steps to be executed on the computer, other programmable data processing devices, or other devices to generate a computer-implemented process. This enables the instructions executed on the computer, other programmable data processing devices, or other devices to implement the functions/actions specified in one or more boxes in the flow charts and/or block diagrams.

The flow charts and block diagrams in the accompanying drawings show the system architecture, functions and operations that may be implemented based on the systems, methods and computer program products according to the plurality of examples of the present disclosure. Regarding this, every block in the flow chart or block diagram can represent a part of a module, program section or instructions, wherein the part of the module, program section or instructions contains one or a plurality of executable instructions that are used to implement the stipulated logic function. In some alternative implementations, the occurrence of the function indicated in the blocks may also differ from the sequence indicated in the accompanying drawings. For example, two continuous blocks may actually be substantially performed in a concurrent manner and they may also sometimes be performed in reverse order, depending on the functions involved. It must also be noted that every block in the block diagrams and/or flow charts, as well as combinations of blocks in the block diagrams and/or flow charts may be implemented by dedicated hardware-based systems used to perform the stipulated functions or actions, or implemented by using combinations of dedicated hardware and computer instructions.

The various examples of the present disclosure have been described above. The descriptions provided are exemplary and not exhaustive, and they are also not limited to the disclosed examples. Many modifications and variations will be apparent to those skilled in the art without departing from the scope and spirit of the described examples. The selection of terms used in this text aims to best explain the principles and actual application of the various examples or the technological improvements in the market or to allow others skilled in the art to understand the various examples disclosed in this text.

## Claims

1. A method for recommendation, comprising:
obtaining a knowledge graph comprising a plurality of user nodes and a plurality of object nodes;
generating one or more sub-graphs based on the knowledge graph, wherein the sub-graph comprises a user node corresponding to the first user and related object nodes among the plurality of user nodes; and
determining a recommendation result for the first user based on the one or more sub-graphs and the plurality of object nodes.

2. The method according to Claim 1, further comprising:
obtaining source data for constructing the knowledge graph, wherein the source data include at least user data, object data, and channel data, wherein the channel data represent channels through which a user establishes an association with an object;
constructing a graph ontology, wherein the graph ontology is used to define types of entity nodes in the knowledge graph, including user nodes, object nodes, and channel nodes; and
constructing the knowledge graph based on the source data and the graph ontology.

3. The method according to Claim 2, wherein the channels comprise one or more of: platforms, content, applications, and stores.

4. The method according to Claim 3, further comprising:
generating an initialization embedding of the entity node using a pre-trained language model based on a description of the entity node; and
generating a node embedding for the entity node and a node embedding for the relationship node with the graph neural network based on an initialization embedding of the entity node and the information file of the knowledge graph, wherein the node embeddings indicate semantic information and structural information of the nodes in the knowledge graph.

5. The method according to Claim 1, wherein generating the one or more sub-graphs comprises:
determining one or more initial sub-graphs and using the user node corresponding to the first user as the initial node of the one or more initial sub-graphs;
determining a plurality of relevance scores between the user node corresponding to the first user and a plurality of neighbor nodes thereof; and
updating the one or more initial sub-graphs based on the plurality of relevance scores.

6. The method according to Claim 5, wherein determining the plurality of relevance scores between the user node corresponding to the first user and the plurality of neighbor nodes comprises:
generating a sub-graph vector of the sub-graph based on the node vectors in the initial sub-graph; and
determining the plurality of relevance scores using a user interaction model based on the sub-graph vector and the node vectors of the plurality of neighbor nodes.

7. The method according to Claim 6, wherein generating the sub-graph vector of the sub-graph comprises:
obtaining a triple set of the sub-graph and a node vector of each node in the sub-graph; and
generating the sub-graph vector based on the triple set and the node vector of each node in the sub-graph.

8. The method according to Claim 6, further comprising:
obtaining user interaction data, wherein the user interaction data include object data and channel data at least related to the first user; and
generating the user interaction model based on the interaction data.

9. The method according to Claim 6, wherein updating the plurality of initial sub-graphs comprises:
selecting a plurality of relevant neighbor nodes from the plurality of neighbor nodes based on the plurality of relevance scores and a score threshold; and
updating the plurality of initial sub-graphs by adding the plurality of related neighbor nodes to the plurality of initial sub-graphs, respectively.

10. The method according to Claim 1, wherein determining the recommendation result for the first user comprises:
generating a sub-graph vector of the one or more sub-graphs;
determining a plurality of recommendation scores based on one or more sub-graph vectors and a plurality of node vectors of the plurality of object nodes; and
selecting the recommendation result from the one or more sub-graphs and a plurality of object nodes based on the plurality of recommendation scores.

11. The method according to Claim 10, wherein determining a plurality of recommendation scores comprises:
determining a similarity score of the one or more sub-graph vectors to a plurality of node vectors of the plurality of object nodes; and
determining the plurality of recommendation scores based on the similarity scores and the weights of the one or more sub-graphs.

12. The method according to Claim 1, wherein the user node corresponding to the first user in the plurality of user nodes is the initial node of the one or more sub-graphs.

13. The method according to Claim 1, further comprising: determining an explanation of the recommendation result;
wherein the explanation of the recommendation result comprises: the sub-graph related to the recommendation result and the importance score of each node in the sub-graph to the recommendation result.

14. An apparatus for recommendation, comprising:
a knowledge graph acquisition module configured to acquire a knowledge graph comprising a plurality of user nodes and a plurality of object nodes;
a sub-graph generation module configured to generate one or more sub-graphs based on the knowledge graph, wherein the sub-graph comprises a user node corresponding to the first user and related object nodes among the plurality of user nodes; and
a recommendation result determination module configured to determine a recommendation result for the first user based on the one or more sub-graphs and the plurality of object nodes.

15. The apparatus according to Claim 14, wherein:
the sub-graph generation module comprises a sub-graph reasoning module and the sub-graph reasoning module is configured to extract the one or more sub-graphs associated with the user from the knowledge graph; and
the recommendation result determination module comprises a recommendation result generation module configured to generate the recommendation result and a corresponding sub-graph of a user action path as the recommendation result.

16. The apparatus according to Claim 14, further comprising:
a data source acquisition module configured to acquire user data, product data, channel data, and content data;
a knowledge graph construction module configured to construct a graph ontology and the knowledge graph; and
a knowledge graph representation module configured to learn the vector representations of entity nodes and relationship nodes in the knowledge graph through a model.

17. An electronic device comprising:
at least one processor; and
a memory, coupled to the at least one processor and having instructions stored thereon, wherein the instructions, when executed by the at least one processor, cause the device to perform the method according to any one of Claims 1 to 13.

18. A computer program product that is tangibly stored on a non-transitory computer-readable medium and includes machine-executable instructions that are used to execute the method according to any one of Claims 1 to 13.
